# DEMANDE DE BREVET EUROPEEN

(11) **EP 1 351 443 A1**
(43) Date de publication de la demande: **08.10.2003**
(21) Numéro de dépôt: 03290640.6
(22) Date de dépôt: 14.03.2003
(51) Int. Cl.: H04L 12/24, H04L 12/56

(54) **Système de gestion de mesure de la qualité d'un service sur un réseau**

(30) Priorité: 05.04.2002 FR 0204272
(71) Demandeur: ALCATEL, 75008 Paris (FR)
(72) Inventeur: Martinot, Olivier, 91210 Draveil (FR); Betge-Brezetz, Stéphane, 75015 Paris (FR); Marilly, Emmanuel, 92160 Antony (FR); Delegue, Gérard, 94230 Cachan (FR)
(74) Mandataire: Chaffraix, Sylvain

(57) **Abrégé**

La présente invention a pour objet un système (9) de gestion de mesure de la qualité d'un service sur un réseau comportant des moyens (3) pour stocker un ensemble de règles logiques de mesure de qualité de service définies par des opérateurs, des moyens (2) d'instanciation des règles logiques, ladite instanciation se faisant en fonction du service indépendamment de la technologie du réseau, des moyens (2) de détermination de points de mesure indépendamment de la technologie du réseau, des moyens (4, 5) d'implémentation des points de mesure sur les éléments (8) du réseau et des moyens (6) de collecte des données obtenues à partir des points de mesure. Ce système (9) est particulièrement adapté au contrôle de la qualité de service et à la facturation de service et peut être intégré à un système global de gestion de service sur un réseau.

## Description

La présente invention concerne un système de gestion de mesure de la qualité d'un service sur un réseau, plus particulièrement adapté au contrôle de la qualité de service et à la facturation de ce service.

Le développement des applications sur les réseaux entraîne une adaptation nécessaire des ressources telles que la bande passante ou le délai de transmission de ces réseaux en fonction du type d'application utilisée. Ainsi, les flux de données liés à une application de téléphonie sont plus sensibles à des contraintes de délai que ne le sont des flux de données de messagerie électronique. Il s'avère donc de plus en plus important de différencier les applications entre elles de façon à les traiter de manière spécifique. Cette différenciation se fait en introduisant une notion de qualité de service, dénommée QoS (Quality Of Service). La QoS est la capacité d'un élément de réseau tel qu'un routeur à assurer la satisfaction des besoins de service et de trafic. Cette QoS offre donc une garantie à un client sur la qualité du service qu'il achète à un fournisseur: les contraintes de performances des éléments de réseaux propres à assurer une certaine QoS sont répertoriées dans un document contractuel dénommé SLA (Service Level Agreement) conclu entre le client et le fournisseur de service. On associe à chaque SLA un ensemble de paramètres techniques de réseau, dénommé SLS (Service Level Specification), lesdits paramètres permettant de définir la manière dont un service doit être traité sur un réseau pour respecter une certaine QoS.

De plus, les infrastructures de réseau sont de plus en plus complexes et hétérogènes puisqu'elles utilisent généralement plusieurs technologies telles que les modes de transmission IP (Internet Protocol) ou ATM (Asynchronous Transfer Mode).

Dans ce contexte, l'introduction d'une grande variété de services, chacun de ces services étant associé à un contrat SLA, complique encore davantage la gestion de ces réseaux. En effet, dans la mesure où les opérateurs offrent de nouveaux services avec une très grande valeur ajoutée, ils ont également besoin de collecter de plus en plus d'informations pertinentes sur les performances de ces services : ces informations par le biais de mesure de paramètres vont permettre à la fois de contrôler la QoS et de facturer le client en conséquence.

De manière connue, on peut aujourd'hui mesurer un nombre limité de paramètres de performance tels que la disponibilité ou la bande passante. La configuration de ces points de mesure sur les éléments de réseau se fait manuellement. Cette configuration manuelle pose un certain nombre de difficultés.

En effet, l'hétérogénéité et la complexité des réseaux imposent des équipes d'intervention possédant de grandes compétences techniques pour pouvoir configurer manuellement chaque type de réseaux.

En outre, la multiplication des offres de services implique que ces équipes aient un effectif très important.

De plus, le déploiement manuel de points de mesure est extrêmement long.

La présente invention vise à fournir un système de gestion de mesure de la qualité d'un service sur un réseau permettant de s'affranchir des problèmes soulevés par la configuration manuelle des points de mesure de performance.

La présente invention propose à cet effet un système de gestion de mesure de la qualité d'un service sur un réseau comportant :
- des moyens pour stocker un ensemble de règles logiques de mesure de la qualité de service définies par des opérateurs
- des moyens d'instanciation desdites règles logiques, ladite instanciation se faisant en fonction dudit service indépendamment de la technologie dudit réseau
- des moyens de détermination des points de mesure indépendamment de la technologie du réseau
- des moyens d'implémentation desdits points de mesure sur les éléments dudit réseau
- des moyens de collecte des données obtenues à partir desdits points de mesure

Grâce à l'invention, le regroupement de l'expertise des opérateurs sous forme de règles logiques pertinentes pour apprécier la qualité de service permet d'éviter les problèmes posés par le besoin croissant en expertise des équipes d'installation ainsi que par leur effectif, toute l'expertise étant regroupée par le biais des moyens de saisie dans les moyens de stockage.

En outre, le déploiement des points de mesure se fait automatiquement lorsqu'un nouveau service est demandé par un utilisateur via les moyens d'implémentation. Cette automatisation permet un gain de temps important.

Avantageusement, le système de gestion de mesure de la qualité d'un service sur un réseau comporte des moyens de comparaison desdites données collectées avec des valeurs seuils. Ces moyens permettent par exemple de déclencher une alarme lorsqu'une valeur seuil est dépassée.

Selon un mode de réalisation, le système selon l'invention comporte des moyens de saisie de règles logiques de mesure de la qualité de service définies par des opérateurs.

Avantageusement, le système selon l'invention comporte des moyens de saisie des paramètres techniques définissant ledit service.

La présente invention propose également un système de gestion de service comportant un système de gestion de mesure de la qualité de service selon l'invention.

Ainsi, le système de gestion de mesure de la qualité de service est directement intégré au système de gestion de service et bénéficie donc des infrastructures de ce système de gestion sans qu'il y ait besoin de concevoir des infrastructures propres au système de gestion de mesure de la qualité de service.

Avantageusement, le système de gestion de service comporte des moyens de stockage de politiques de service, des moyens de distribution desdites politiques de service et des moyens d'application desdites politiques de service sur les éléments dudit réseau et est caractérisé en ce que :
- lesdits moyens de stockage de politiques de service incluent lesdits moyens pour stocker ledit ensemble de règles logiques de mesure
- lesdits moyens de distribution desdites politiques de service incluent lesdits moyens d'instanciation desdites règles logiques de mesure pour surveiller ledit service et lesdits moyens de détermination des points de mesure
- lesdits moyens d'application desdites politiques de service sur les éléments dudit réseau incluent lesdits moyens d'implémentation desdits points de mesure sur les éléments dudit réseau.

D'autres caractéristiques et avantages de la présente invention apparaîtront dans la description suivante d'un mode de réalisation de l'invention, donné à titre illustratif et nullement limitatif.

Dans les figures suivantes :
- La figure 1 représente schématiquement le système de gestion de mesure de la qualité de service selon l'invention,
- La figure 2 représente un système de gestion de service selon l'art antérieur,
- La figure 3 représente un système de gestion de service selon l'invention.

Dans toutes les figures, les éléments communs portent les mêmes numéros de référence.

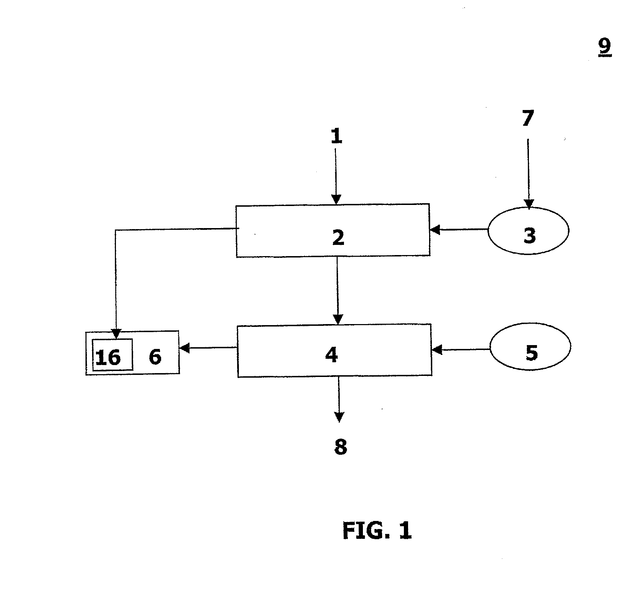

La figure 1 représente schématiquement un système 9 selon l'invention. Le système 9 comporte des moyens 1 de saisie des paramètres techniques définissant ou modifiant un service, des moyens 7 de saisie de règles logiques de mesure de qualité de service, des moyens 3 pour stocker un ensemble de règles logiques de mesure de qualité de service définies par des opérateurs, des moyens 2 d'instanciation des règles logiques et de détermination de points de mesure, des moyens 4 et 5 d'implémentation desdits points de mesure sur les éléments 8 du réseau et des moyens 6 de collecte des données obtenues à partir des points de mesure incorporant des moyens 16 de comparaison desdites données collectées avec des valeurs seuils.

De la façon la plus exhaustive possible, les opérateurs vont saisir via les moyens 7 dans les moyens 3, les règles logiques permettant de mesurer de façon pertinente la qualité d'un service. Ces règles sont logiques et donc à un haut niveau d'abstraction indépendant de la technologie des réseaux utilisés.

Lorsqu'un utilisateur négocie un contrat du type SLA avec un fournisseur de service, ce contrat va permettre de définir des paramètres techniques contenus dans une spécification du type SLS. Ces paramètres techniques sont saisis au niveau des moyens 1. Ces paramètres sont saisis, soit totalement par l'opérateur en fonction du contrat SLA conclu, soit partiellement par l'utilisateur par le biais d'une interface web par exemple.

En fonction des paramètres SLS provenant des moyens 1, les moyens 2 vont chercher dans les moyens 3 les règles logiques nécessaires à la mise en place de la mesure et déterminer à partir de ces règles les points de mesure pour la mise en place de la mesure de qualité du service.

Les moyens 4 utilisent alors les informations fournies par les moyens 2 pour implémenter physiquement, c'est à dire sur les éléments 8 physiques du réseau, les mesures à effectuer. Pour cela, les moyens 4 utilisent aussi des règles physiques dépendant du réseau sur lequel les mesures sont implémentées; ces règles physiques sont fournies par les moyens 5. Les moyens 4 vont également fournir les emplacements des points de mesure aux moyens 6 chargés de collecter les mesures. Les mesures sont ensuite collectées dans les moyens 6. Les moyens 16 vont alors permettre de comparer les valeurs des mesures collectées en fonction de valeurs seuils, ces valeurs seuils étant fournies par les moyens 2 en fonction des paramètres SLS. Les moyens 16 peuvent ainsi déclencher une alarme lorsque les valeurs des mesures collectées dépassent les valeurs seuils.

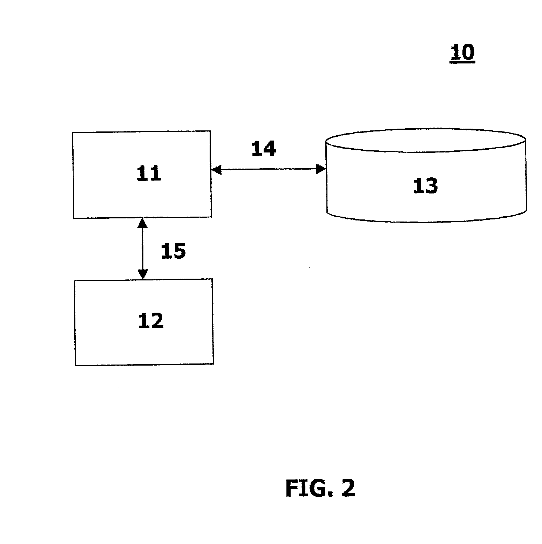

La figure 2 représente un système 10 de gestion de service sur un réseau. Ce type de système a déjà été décrit par l'organisme de standardisation IETF (Internet Engineering Task Force). Le système 10 comporte un serveur 11 de règles ou point de distribution de politiques noté PDP (Policy Decision Point), un dispositif 12 ou point d'application de politiques noté PEP (Policy Enforcement Point) et une base 13 de données de politique notée PR (Policy Repository). L'échange d'informations entre le serveur 11 et la base de données 13 se fait par un protocole 14 du type LDAP (Lightweight Directory Access Protocol) et l'échange d'informations entre le serveur 11 et le dispositif 12 se fait par un protocole 15 du type COPS (Common Open Policy Service).

Un utilisateur informe le dispositif 11 d'un besoin ou d'une modification de service. Le serveur 11 cherche via le protocole 14 dans la base de données 13 la règle correspondant à cette requête puis instancie cette règle et détermine les points où la règle doit être appliquée. Le serveur 11 renvoie alors une décision au dispositif 12 qui va implémenter physiquement le service sur le réseau.

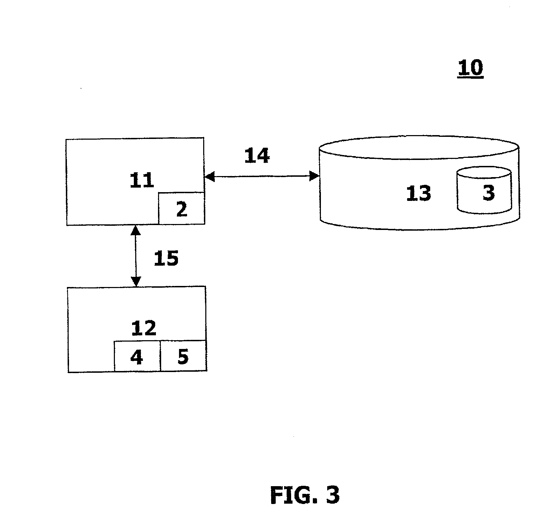

La figure 3 représente un système 10 de gestion de service sur un réseau tel que décrit dans la figure 2 comportant des moyens 3 pour stocker un ensemble de règles logiques de mesure, des moyens 2 d'instanciation des règles logiques et de détermination de points de mesure et des moyens 4 et 5 d'implémentation desdits points de mesure sur les éléments du réseau.

La base de données 13 inclut les moyens 3, Le serveur 11 inclut les moyens 2 et le dispositif 12 inclut les moyens 4 et 5.

Ainsi, lorsqu'un utilisateur souscrit un nouveau service, l'implémentation de ce service se fait en même temps et grâce aux mêmes outils que l'implémentation de la mesure des paramètres pertinents de qualité de service associés.

Chaque paramètre SLS peut se décomposer en une série de classes objets. Parmi ces classes on peut citer par exemple:
- La période de validité du service c'est à dire la période de temps pendant laquelle le service est utilisable ;
- La topologie qui définit les ports d'entrée et de sortie ;
- Le profil du trafic des données c'est à dire les caractéristiques du trafic pour répondre à la qualité de service demandée (notamment la bande passante).

Pour la mise en place d'un service associé à un paramètre SLS, le serveur 11 va utiliser une ou des règles associées à la classe « topologie ».

Pour la mise en place de la mesure, les moyens 2 vont également utiliser des règles logiques associées à la classe topologie. La classe « période de validité » va permettre aux moyens 2 d'informer les moyens 6 de collecte de mesure représentés en figure 1 sur la période pendant laquelle les mesures doivent être effectuées. La classe « profil du trafic de données » va permettre aux moyens 2 d'informer les moyens 16 de seuils à mettre en place. Ainsi, en cas de non-respect de la qualité de service, les valeurs de mesure vont dépasser les valeurs seuils et déclencher une alarme.

## Revendications

1. Système (9) de gestion de mesure de la qualité d'un service sur un réseau **caractérisé en ce que** ledit système (9) comporte
- des moyens (3) pour stocker un ensemble de règles logiques de mesure de qualité de service définies par des opérateurs
- des moyens (2) d'instanciation desdites règles logiques, ladite instanciation se faisant en fonction dudit service indépendamment de la technologie dudit réseau
- des moyens (2) de détermination de points de mesure indépendamment de la technologie dudit réseau
- des moyens (4, 5) d'implémentation desdits points de mesure sur les éléments dudit réseau
- des moyens (6) de collecte des données obtenues à partir desdits points de mesure.

2. Système (9) selon la revendication précédente comportant des moyens (16) de comparaison desdites données collectées avec des valeurs seuils.

3. Système (9) selon la revendication 1 ou 2 comportant des moyens (7) de saisie de règles logiques de mesure de qualité de service définies par des opérateurs.

4. Système (9) selon l'une des revendications précédentes comportant des moyens (1) de saisie des paramètres techniques définissant ledit service.

5. Système (10) de gestion de service sur un réseau comportant un système (9) de gestion de mesure de la qualité de service selon l'une des revendications précédentes.

6. Système (10) selon la revendication 5 comportant des moyens (13) de stockage de politiques de service, des moyens (11) de distribution desdites politiques de service et des moyens (12) d'application desdites politiques de service sur les éléments dudit réseau, ledit système (10) étant **caractérisé en ce que** :
- lesdits moyens (13) de stockage de politiques de service incluent lesdits moyens (3) pour stocker ledit ensemble de règles logiques de mesure
- lesdits moyens (11) de distribution desdites politiques de service incluent lesdits moyens (2) d'instanciation desdites règles logiques de mesure pour surveiller ledit service et lesdits moyens (2) de détermination des points de mesure
- lesdits moyens (12) d'application desdites politiques de service sur les éléments dudit réseau incluent lesdits moyens (4, 5) d'implémentation desdits points de mesure sur les éléments dudit réseau.
